# EUROPÄISCHE PATENTSCHRIFT

(11) **EP 2 964 843 B1**
(45) Veröffentlichungstag und Bekanntmachung des Hinweises auf die Patenterteilung: **01.11.2017**
(21) Anmeldenummer: 14704080.2
(22) Anmeldetag: 07.02.2014
(51) Int. Cl.: E03C 1/04, F16L 55/00

(54) **STRAHLREGLER MIT SCHLAUCHAUFNAME**
JET REGULATOR WITH HOSE CONNECTOR
RÉGULATEUR DE JET AVEC CONNECTEUR DE TUYAU

(30) Priorität: 08.03.2013 DE 202013002189 U
(43) Veröffentlichungstag der Anmeldung: 13.01.2016
(73) Patentinhaber: Neoperl GmbH, 79379 Müllheim (DE)
(72) Erfinder: SCHÜRLE, Holger, 79379 Müllheim (DE); BAMMERLIN, Werner, 79379 Müllheim (DE); ZÖSCHINGER, Christian, 88255 Baindt (DE)
(74) Vertreter: Börjes-Pestalozza, Henrich
(86) Internationale Anmeldenummer: PCT/EP2014/000344
(87) Internationale Veröffentlichungsnummer: WO 2014/135242

(56) Entgegenhaltungen:
- EP-A1- 1 350 573
- EP-A1- 2 384 819
- EP-A1- 2 674 534
- US-A1- 2008 185 060
- US-B1- 6 381 774

## Beschreibung

Die Erfindung betrifft ein sanitäres Einbauteil mit einem in eine Auslauföffnung einer Sanitärarmatur einsetzbaren Grundkörper, mit einer an dem Grundkörper zuströmseitig ausgebildeten Einlassöffnung, an der eine Schlauchaufnahme ausgebildet ist, an welcher ein Verbindungsschlauch (9) an den Grundkörper anschließbar ist, mit einer in einem Strömungsweg hinter der Einlassöffnung an dem Grundkörper angeordnete Strahl- und/oder Mengenreglereinheit, und mit einem zur zugfesten Befestigung des Verbindungsschlauches an dem Grundkörper ausgebildeten Befestigungsmittel, mit dem der Verbindungsschlauch an dem Grundkörper unverlierbar befestigbar ist, wobei der Verbindungsschlauch mit der Schlauchaufnahme steckverbindbar und dazu in die als Ausnehmung ausgebildete Schlauchaufnahme einsteckbar ist, und wobei der Verbindungsschlauch mittels dem Befestigungsmittel in der Schlauchaufnahme arretierbar oder sicherbar ist, so dass der Verbindungsschlauch an dem Grundkörper unverlierbar befestigt ist.

Bekannte sanitäre Einbauteile werden außenseitig mit einem Gewinde versehen, um das sanitäre Einbauteil als Mundstück in den Auslauf einer Armatur einzuschrauben.

Hierzu ist es erforderlich, in die Armatur ein entsprechendes Innengewinde zu schneiden, was fertigungstechnisch aufwendig ist, da die Armaturen aus Metall bestehen.

Die Erfindung betrifft weiter eine Einbauteil-Anordnung mit einem in einer Sanitärarmatur verlegbaren Verbindungsschlauch.

Die Erfindung betrifft eine Sanitärarmatur mit einem Armaturenkörper und einer in den Armaturenkörper eingesetzten Einbauteil-Anordnung der beschriebenen Art.

Es ist üblich geworden, einen Kontakt des in der Armatur fließenden Trinkwassers mit der Metallwand des Armaturenkörpers zu vermeiden, indem ein zusätzlicher Innenschlauch aus Kunststoff in dem Armaturenkörper angeordnet wird. Hierbei bewirkt der bereits erwähnte eingeschraubte Grundkörper eine dichte Pressverbindung mit einem an dem Innenschlauch ausgebildeten Flansch.

Aus der US 2010/0071778 A kennt man bereits ein sanitäres Einbauteil mit einem Grundkörper, der in eine Auslauföffnung einer sanitären Auslaufarmatur einsetzbar ist. An der Zuströmseite des Grundkörpers ist eine Einlassöffnung ausgebildet, hinter der im Strömungsweg eine Strahl- und/oder Mengenreglereinheit an dem Grundkörper angeordnet ist. An der Einlassöffnung des Grundkörpers ist eine Schlauchaufnahme angeordnet, an der ein wasserführender Verbindungsschlauch anschließbar ist. Dabei ist an dem Grundkörper ein Befestigungsmittel ausgebildet, mit welchem ein mit der Schlauchaufnahme steckverbindbarer Verbindungsschlauch an dem Grundkörper unverlierbar befestigt werden kann. Nachteilig ist jedoch, dass der Grundkörper des vorbekannten Einbauteiles mehrteilig ausgestaltet ist und die Schlauchaufnahme einerseits und die in Strömungsrichtung dahinterliegende Strahl-und/oder Mengenreglereinheit voneinander beabstandet im Grundkörper angeordnet sind. Die Herstellung und Montage des vorbekannten Einbauteiles wird durch die Mehrteiligkeit des Grundkörpers und dadurch erschwert, dass eine leckagefreie Wasserführung bis zur Strahl- und/oder Durchflussmengenreglereinheit eine dichte Verbindung der Bestandteile in den einzelnen Trennebenen voraussetzt.

Sanitärarmaturen mit Innenschläuchen wurden in der Vergangenheit auch im Zusammenhang mit ausziehbaren Handbrausen verwendet. So offenbart EP 1 350 573 A1 eine ausziehbare Küchenbrausearmatur, umfassend einen Zentralkörper, der innerhalb einer äußeren Ummantelung untergebracht ist, deren Form so ausgebildet ist, dass sie die Zusammensetzung mit einer bestimmten Orientierung bezüglich der Position des Benutzers erfordert, wodurch die Brausearmatur lösbar an einem röhrenförmigen Körper eines Wasserhahns so angebracht ist, dass die äußere Ummantelung einen nach vorne zeigenden Abschnitt aufweist, der dem Benutzer zugewandt ist.

Aus der EP 2 384 819 A1 ist eine Brauseeinrichtung für Küchenspülen bekannt, umfassend einen Grundkörper, welcher in einem Außengehäuse eingesetzt ist, so dass er durch einen Benutzer ergriffen werden kann, und welcher mit einer Kupplung an einem flexiblen Wasserschlauch versehen ist, welcher dazu ausgelegt ist, dass er mit einem Wasserhahn verbunden werden kann.

Eine ausziehbare Handbrause wird ebenfalls in der US 6,381,774 B1 offenbart, wobei die Handbrause zwischen einer verlängerten Position, bei der der Brausekopf von der Ausflussöffnung beabstandet ist, und eine zurückgezogene Position, bei der der Brausekopf neben der Ausflussöffnung platziert ist, verlagerbar ist.

Aus der US 2008/0185060 A1 ist eine ausziehbare Handbrause bekannt, bei der das Griffteil mit dem Wasserhahn durch eine magnetische Kopplung lösbar verbunden ist.

Die EP 2 674 534 A1 offenbart eine Armatur mit ausziehbarer Brause, die an einen Brauseschlauch angeschlossen ist und die derart ausgebildet ist, dass der Schlauch samt Brause nach dem Herausziehen wieder zuverlässig in seine Endlage zurückgeführt wird.

Aus der CA 2 648 412 A kennt man bereits ein sanitäres Einbauteil, das einen, in einer Auslauföffnung einer Sanitärarmatur einsetzbaren Grundkörper hat. An diesen Grundkörper ist ein Schlauchstutzen angeformt, dessen zuströmseitige stutzen-öffnung eine Einlassöffnung bildet. Der Schlauchstutzen bildet gleichzeitig eine Schlauchaufnahme, an welcher ein Verbindungsschlauch an den Grundkörper anschließbar ist. Der Schlauchstutzen des Grundkörpers weist an seinem Stutzenaußenumfang eine Halteprofilierung auf, die ein Befestigungsmittel bildet, um einen mit dieser Schlauchaufnahme steckverbindbaren Verbindungsschlauch unverlierbar an dem Grundkörper befestigen zu können. An der dem Schlauchstutzen abgewandten Stirnseite des Grundkörpers ist ein hülsenförmiges Auslaufmundstück befestigbar, in das eine Strahl- und/oder Durchflussmengenreglereinheit einsetzbar ist. Da der Schlauchstutzen an dem einen Ende des Grundkörpers und das Auslaufmundstück an dessen anderen Stirnende vorgesehen ist, und da das die Strahl- und/oder Durchflussmengenreglereinheit in sich aufnehmende Auslaufmundstück weit über den Grundkörper vorsteht, ragt das Auslaufmundstück entsprechend weit über das Auslaufende der Sanitärarmatur vor und ist dort als ein von der Sanitärarmatur getrennt hergestelltes Bauteil deutlich wahrnehmbar.

Aus der EP 2 224 065 A1 kennt man ein sanitäres Einbauteil, das einen hülsenförmigen Grundkörper hat. In diesen hülsenförmigen Grundkörper ist von der ausströmseitigen Stirnseite aus eine Strahl- und/oder Durchflussmengenreglereinheit einschraubbar. Der zuströmseitige Abschnitt des hülsenförmigen Grundkörpers ist demgegenüber als Fixierungshülse ausgestaltet, in die ein wasserführender Verbindungsschlauch beispielsweise mittels einer John Guest-Kupplung unverlierbar eingesteckt und angeschlossen werden kann. Durch die hülsenförmige Ausgestaltung des Grundkörpers und die Notwendigkeit, darin einerseits die Strahl- und/oder Durchflussmengenreglereinheit und andererseits die John Guest-Kupplung unterzubringen, weist der Grundkörper eine vergleichsweise große Längserstreckung auf, die einen entsprechend langen Wasserauslauf an der sanitären Auslaufarmatur erfordert und die damit die Gestaltungsmöglichkeiten für eine solche Auslaufarmatur einschränken kann.

Ein vergleichbar ausgestaltetes sanitäres Einbauteil ist auch aus der DE 10 2007 015 124 A1 vorbekannt. Das dort vorbeschriebene Einbauteil hat eine Strahlreglereinheit, an die ein durch den Armaturenkorpus geführter Verbindungsschlauch angeschlossen ist. Dazu ist zwischen dem Schlauch und dem Strahlregler ein Schlauchfitting mit einem Schlauchnippel vorgesehen, auf den der Schlauch aufgeschoben ist. Das Schlauchfitting ist mit einer Dichtfläche versehen, auf die der Strahlregler dichtend aufgeschraubt ist. Mit seiner der Dichtfläche abgewandten Anschlagfläche liegt das Schlauchfitting am freien Ende des Wasserauslaufs an.

Es besteht die Aufgabe, ein sanitäres Einbauteil, eine Einbauteil-Anordnung sowie eine Sanitärarmatur zu schaffen, mit denen der Fertigungsaufwand für eine Sanitärarmatur vermindert werden kann.

Zur Lösung dieser Aufgabe werden für das sanitäre Einbauteil der eingangs erwähnten Art erfindungsgemäß die Merkmale von Anspruch 1 vorgeschlagen. Insbesondere wird somit erfindungsgemäß bei einem sanitären Einbauteil der eingangs beschriebenen Art vorgeschlagen, dass an der Einlassöffnung eine Schlauchaufnahme ausgebildet ist, an welcher ein Verbindungsschlauch an dem Grundkörper anschließbar ist, und dass ein zur zugfesten Befestigung des Verbindungsschlauches an dem Grundkörper ausgebildetes Befestigungsmittel vorgesehen ist, mit welchem der Verbindungsschlauch an dem Grundkörper unverlierbar befestigbar ist. Dabei ist der Verbindungsschlauch mit der Schlauchaufnahme steckverbindbar. Der Verbindungsschlauch ist dazu in die als Ausnehmung ausgebildete Schlauchaufnahme einsteckbar, wobei der Verbindungsschlauch mittels dem Befestigungsmittel in der Schlauchaufnahme arretierbar oder sicherbar ist, so dass der Verbindungsschlauch an dem Grundkörper unverlierbar befestigt ist. Von Vorteil ist dabei, dass die Strahl- und/oder Mengenreglereinheit direkt an dem Verbindungsschlauch befestigbar ist, ohne dass eine Abstützung oder Halterung über einen Armarturkörper erforderlich ist. Der Verbindungsschlauch der Erfindung ist als solch ein Innenschlauch verwendbar. Die Erfindung macht sich hierbei die Erkenntnis zunutze, dass bei Armaturen mit Innenschlauch der Wasserdruck nicht mehr an einem Armaturenkörper anliegt, sondern dass dieser Wasserdruck durch den Innenschlauch aufgenommen wird. Die Erfindung nutzt daher, dass bereits eine Befestigung des sanitären Einbauteiles am Verbindungsschlauch ausreichend ist, um den Wasserdruck aufzunehmen. Weitere Befestigungsmittel an dem Armaturenkörper sind verzichtbar. Da das Befestigungsmittel zur zugfesten Befestigung des steckverbindbaren oder steckverbundenen Verbindungsschlauches an dem Grundkörper ausgebildet ist, ist ein Wasserdruck in dem Verbindungsschlauch von dem befestigten Grundkörper aufnehmbar, ohne dass sich die Verbindung zwischen eingestecktem Verbindungsschlauch und Grundkörper löst.

Unter einer unverlierbaren Befestigung wird jede Befestigung verstanden, welche mit dem Befestigungsmittel gegen ein unkontrolliertes selbsttätigendes Lösen gesichert ist, insbesondere in dessen arretierender Position. Die unverlierbare Befestigung kann lösbar, insbesondere reversibel, oder unlösbar ausgebildet sein.

Da die Schlauchaufnahme erfindungsgemäß als Ausnehmung ausgebildet ist, in welche der Verbindungsschlauch einsteckbar ist, sind in der Schlauchaufnahme geeignete Dichtmittel ausbildbar und die Schlauchaufnahme kann ein eingestecktes Schlauchende eines Verbindungsschlauches druckfest aufnehmen. Es sind auch Rast- und/oder Schnappverbindungsmittel an der Schlauchaufnahme ausbildbar, die mit dem Verbindungsschlauch zusammenwirken.

Von Vorteil ist dabei weiter, dass die Funktion eines aufnehmenden Armaturenkörpers auf im Wesentlichen optische Funktionen reduziert werden kann, so dass die Materialstärke oder der Materialeinsatz bei der Armatur verringerbar ist. Diese Vorteile vereinfachen die Fertigung einer Sanitärarmatur beträchtlich. Da bei dem erfindungsgemäßen Einbauteil die Schlauchaufnahme an der Strahl- und/oder Mengenreglereinheit angeformt ist, ist die von dem Wasserdruck im verbindungsschlauch beaufschlagte Strahl- und/oder Mengenreglereinheit besonders gut zur Aufnahme des Wasserdrucks mit dem verbindungsschlauch verbindbar. Durch die direkte Anformung der Schlauchaufnahme an der Strahl- und/oder Mengenreglereinheit ist zusätzlich eine erhöhte Dichtigkeit des Abschlusses des Verbindungsschlauchs durch das sanitäre Einbauteil erreichbar. Da der Grundkörper einstückig ausgebildet ist, wird ein einfach fertig- und/oder montierbarer Grundkörper bereitgestellt.

Die Strahl- und/oder Mengenreglereinheit kann zwischen der Einlassöffnung und einer abströmseitig an dem Grundkörper oder dem sanitären Einbauteil ausgebildeten Auslassöffnung ausgebildet und/oder angeordnet sein. Gemäss der Erfindung ist die Strahl- und/oder Mengenreglereinheit hinter der Einlassöffnung an dem Grundkörper angeordnet.

Unter einer Strahlreglereinheit wird eine Funktionseinheit verstanden, welche zumindest eine Düse aufweist, die maßgeblich für wahrnehmbare Eigenschaften eines austretenden Wasserstrahls verantwortlich ist. Unter einer Mengenreglereinheit wird eine Funktionseinheit verstanden, welche eine Durchflussmenge begrenzt. Es können auch beide Funktionseinheiten in einer Strahl- und/oder Mengenreglereinheit kombiniert sein.

Bei einer vorteilhaften Ausgestaltung kann vorgesehen sein, dass das Befestigungsmittel zur lösbaren Befestigung eines steckverbindbaren Verbindungsschlauches an den Grundkörper ausgebildet ist. Von Vorteil ist dabei, dass der Grundkörper einfach verbindbar und wieder lösbar ist.

Bei einer vorteilhaften Ausgestaltung kann vorgesehen sein, dass das Befestigungsmittel um eine Verbindungsrichtung drehbar an dem Grundkörper angeordnet ist. Von Vorteil ist dabei, dass eine Drehbewegung, die auf den Grundkörper, beispielsweise beim Einschrauben, eingebracht wird, von dem eingesteckten Verbindungsschlauch entkoppelbar ist. Denn das Befestigungsmittel, welches den Verbindungsschlauch greift, muss die Drehbewegung nicht nachvollziehen, sondern kann unbeweglich verbleiben. Das sanitäre Einbauteil ist somit bei Ausgestaltungen, bei denen außenseitig ein Gewinde ausgebildet ist, mit eingestecktem Verbindungsschlauch einschraubbar, ohne dass der Verbindungsschlauch tordiert wird. Auch bei einer Ausgestaltung des sanitären Einbauteils, bei der außenseitig kein Gewinde ausgebildet ist, ist die drehbare Anordnung des Befestigungsmittels von Vorteil, um eine Schädigung des Verbindungsschlauchs bei versehentlicher unsachgemäßer Benutzung zu vermeiden.

Die drehbare Befestigung des Befestigungsmittels am Grundkörper ist weiter von Vorteil, wenn der Grundkörper oder das sanitären Einbauteil eine unrunde Außenkontur, beispielsweise eine dreieckige, viereckige oder mehreckige oder unregelmäßige Außenkontur, aufweist. Denn dann ermöglicht die Drehbarkeit ein Einsetzen des am Verbindungsschlauch befestigten sanitären Einbauteils in richtiger oder passender Orientierung in eine passende Innenkontur einer Sanitärarmatur.

Die Schlauchaufnahme kann beispielsweise als Schlauchnippel oder Olive ausgebildet sein, auf welches/welche der Verbindungsschlauch aufsteckbar ist. Hierbei kann das Befestigungsmittel eine Schlauchklemme aufweisen.

Bei einer vorteilhaften Ausgestaltung kann vorgesehen sein, dass das Befestigungsmittel ringförmig oder hülsenförmig um eine durch die Schlauchaufnahme definierte Verbindungsrichtung umlaufend ausgebildet ist. Hierbei kann das Befestigungsmittel, insbesondere senkrecht zu seiner Längsrichtung, einen runden oder einen eckigen Querschnitt, beispielsweise einen dreieckigen oder einen viereckigen oder einen mehreckigen Querschnitt, oder einen anders geformten Querschnitt aufweisen. Von Vorteil ist dabei, dass das Befestigungsmittel einen eingesetzten Verbindungsschlauch an mehreren in Umfangssrichtung versetzten Punkten und/oder allseitig in Umfangsrichtung greifen kann.

Bei einer vorteilhaften Ausgestaltung kann vorgesehen sein, dass das Befestigungsmittel zwischen einer einen an die Schlauchaufnahme angeschlossenen Verbindungsschlauch arretierenden Position und einer den Verbindungsschlauch freigebenden Position umschaltbar ausgebildet ist. Von Vorteil ist dabei, dass auf einfache Weise die unverlierbare Befestigung herstellbar und eine Freigabe des Verbindungsschlauchs zur Entnahme von der Schlauchaufnahme erreichbar ist. Bevorzugt ist das Befestigungsmittel selbst-arretierend ausgebildet.

Bei einer vorteilhaften Ausgestaltung kann vorgesehen sein, dass das Befestigungsmittel entlang einer durch die Schlauchaufnahme definierten Verbindungsrichtung verschiebbar angeordnet ist. Von Vorteil ist dabei, dass ein Umschalten zwischen einer arretierenden Position und einer freigebenden Position durch Verschiebung in Verlaufsrichtung eines eingesetzten Schlauchs bewirkbar ist. Hierdurch ist der insgesamt benötigte Bauraum reduzierbar. Alternativ kann eine umschaltende Bestätigung des Befestigungsmittels auch durch eine radiale Verlagerung des Befestigungsmittels erreichbar sein.

Alternativ oder zusätzlich kann das Befestigungsmittel mittels eines Magneten in die freigebende Position überführbar sein.

Bei einer Ausgestaltung der Erfindung kann vorgesehen sein, dass das Befestigungsmittel wenigstens ein in die Schlauchaufnahme ragendes Halteelement aufweist. Das Halteelement kann hierbei als Haltekralle oder Halteschneide oder auf anderer Weise ausgebildet sein. Von Vorteil ist dabei, dass mit dem Halteelement ein sicherer Halt des eingesetzten Verbindungsschlauches bewirkbar ist.

Insgesamt kann hierbei vorgesehen sein, dass das wenigstens eine Halteelement als ein Widerhaken ausgebildet ist. Von Vorteil ist dabei, dass ein selbsttätiges Halten des eingesteckten Verbindungsschlauches an dem Grundkörper erreichbar ist.

Bei einer Ausgestaltung der Erfindung kann vorgesehen sein, dass das wenigstens ein Halteelement an einem elastisch verformbaren Haltefinger ausgebildet ist. Von Vorteil ist dabei, dass ein Wirkkontakt zwischen dem Halteelement und dem eingestecktem Verbindungsschlauch durch elastische Deformation des Haltefingers einfach herstellbar bzw. aufhebbar ist. Besonders günstig ist es dabei, wenn sich der wenigstens eine Haltefinger axial erstreckt. Von Vorteil ist dabei, dass ein sich axial erstreckender Haltfinger in radialer Richtung beweglich ist, so dass das an dem Haltefinger, insbesondere an einer Spitze des Haltefingers, ausgebildete Halteelement auf einfache Weise mit dem eingestecktem Verbindungsschlauch in Wirkkontakt bringbar ist.

Bei einer Ausgestaltung der Erfindung kann vorgesehen sein, dass der Grundkörper zum Einklipsen und/oder Schnapp- oder Rastverbinden mit einer Auslauföffnung einer Sanitärarmatur ausgebildet ist. Von Vorteil ist dabei, dass der Grundkörper einfach befestigbar ist, um beispielsweise eine einschraubbare Strahl- und/oder Mengenreglereinheit aufzunehmen.

Bei einer Ausgestaltung der Erfindung kann vorgesehen sein, dass in der Schlauchaufnahme eine ringförmig um eine, beispielsweise die bereits erwähnte, durch die Schlauchaufnahme definierte Verbindungsrichtung umlaufende Dichtung ausgebildet ist. Von Vorteil ist dabei, dass ein Verbindungsschlauch nach Einsetzen in die Schlauchaufnahme nach außen dicht abschließbar ist.

Bei einer Ausgestaltung der Erfindung kann vorgesehen sein, dass ein Innendurchmesser der Dichtung auf eine lichte Weite des Befestigungselements abgestimmt ist. Bevorzugt ist der Innendurchmesser der Dichtung kleiner als die lichte Weite des Befestigungselements. Von Vorteil ist dabei, dass ein durch das Befestigungselement passender Verbindungsschlauch mit der Dichtung dicht abschließbar ist, da die Dichtung automatisch eng an dem eingesetzten Verbindungsschlauch anliegt.

Bei einer Ausgestaltung der Erfindung kann vorgesehen sein, dass ein Arretierungsring mit einer innenseitigen Schrägfläche ausgebildet ist, die in einer, beispielsweise der bereits erwähnten, arretierenden Position mit einer radial nach außen abstehenden Nase des Befestigungsmittels zusammenwirkt. Von Vorteil ist dabei, dass die Nase mit der innenseitigen Schrägfläche beaufschlagbar ist, wenn das Befestigungsmittel gegen die Schrägfläche verstellt wird. Die Schrägfläche sorgt dafür, dass die Beaufschlagung in eine radial gegen den eingesetzten Verbindungsschlauch wirkende Anpresskraft umsetzbar ist, welche eine unverlierbare Befestigung des eingesetzten Verbindungsschlauchs bewirkt. Durch eine Relativbewegung des Befestigungsmittels relativ zu dem Arretierungsring kann die Verbindung einfach gelöst Werden.

Bei einer Ausgestaltung der Erfindung kann vorgesehen sein, dass der Arretierungsring an den Grundkörper mit einer Rastverbindung gehalten ist. Von Vorteil ist dabei, dass der Arretierungsring einfach montierbar ist. Insbesondere ist somit erreichbar, dass der Arretierungsring nach Einsetzen der bereits erwähnten umlaufenden Dichtung in die Schlauchaufnahme einsetzbar ist. Somit ist es nicht erforderlich, die umlaufende Dichtung durch die vergleichsweise enge Öffnung des Arretierungsrings zu zwängen, um die Dichtung in der Schlauchaufnahme zu positionieren.

Bei einer Ausgestaltung der Erfindung kann vorgesehen sein, dass in der Schlauchaufnahme an einem der Strahl- und/oder Mengenreglereinheit zugewandten axialen Ende ein erster Innenzylinderabschnitt ausgebildet ist. Von Vorteil ist dabei, dass mit dem ersten Innenzylinderabschnitt eine Zentrierung eines eingesetzten Verbindungsschlauchs erreichbar ist. Von Vorteil ist dabei, dass ein eingesetzter verbindungsschlauch in dem ersten Innenzylinderabschnitt auf einfache Weise zentrierbar ist.

Hierbei kann vorgesehen sein, dass ein Innenradius des ersten Innenzylinderabschnitts größer als ein Innenradius der Dichtung gewählt ist. Von Vorteil ist dabei, dass in die Schlauchaufnahme und insbesondere in den Innenzylinderabschnitt Verbindungsschläuche einsetzbar sind, bei denen die Dichtung automatisch dicht anliegt.

Bei einer Ausgestaltung der Erfindung kann vorgesehen sein, dass in der Schlauchaufnahme in einer, beispielsweise der bereits erwähnten, Einsteckrichtung ein einem, beispielsweise dem bereits erwähnten, ersten Innenzylinderabschnitt vorgelagerter zweiter Innenzylinderabschnitt ausgebildet ist. Von Vorteil ist dabei, dass ein Raum geschaffen ist, in welchen die bereits beschriebene Dichtung einfach einsetzbar ist.

Hierbei kann vorgesehen sein, dass eine Differenz zwischen einem zweiten Innenradius des zweiten Innenzylinderabschnitts und einem, beispielsweise dem bereits erwähnten, ersten Innenradius des ersten Innenzylinderabschnitts kleiner als eine radiale Materialstärke der Dichtung gewählt ist. Von Vorteil ist dabei, dass ein in den ersten Innenzylinderabschnitt eingesetzter Verbindungsschlauch die Dichtung gegen den zweiten Innenzylinderabschnitt radial presst, wodurch ein besonders gut dichtender Abschluss gebildet ist.

Bei einer Ausgestaltung der Erfindung kann vorgesehen sein, dass der Grundkörper außenseitig gewindelos ausgebildet ist. Von Vorteil ist dabei, dass keine Bearbeitungsschritte zum Schneiden eines Gewindes an einem Armaturenkörper erforderlich sind, um den Grundkörper aufzunehmen.

Es hat sich herausgestellt, dass der Grundkörper allein durch seine Befestigung an den Verbindungsschlauch an der Armatur anordenbar und befestigbar ist.

Bei einer Ausgestaltung der Erfindung kann vorgesehen sein, dass an dem sanitären Einbauteil außenseitig ein radial abstehendes Anschlagelement ausgebildet ist. Von Vorteil ist dabei, dass das Anschlagelement einen Widerstand gegen eine Rückstoßkraft der Auslassöffnung austretenden Wasser bildet. Somit wird der Grundkörper beim Betrieb des sanitären Einbauteils in einer Armatur automatisch gegen den Armaturenkörper gehalten. Das Anschlagelement kann beispielsweise ringförmig ausgebildet sein.

Bei einer Ausgestaltung der Erfindung kann vorgesehen sein, dass die Strahl- und/oder Mengenreglereinheit wenigstens eine Zerlegerplatte aufweist.

Von Vorteil ist dabei insgesamt, dass die zerlegerplatte, welche einen Strömungswiderstand gegen das durch den Verbindungsschlauch einströmende Wasser darstellt, unverlierbar mit dem Verbindungsschlauch verbindbar ist. Somit sind weitere Maßnahmen zur Halterung der Strahl- und/oder Mengenreglereinheit, beispielsweise an der Armatur, verzichtbar.

Der Verbindungsschlauch kann beispielsweise aus PEX (kreuzvernetztes Polyäthylen) oder Polyamid gefertigt sein, um eine gute Flexibilität bereitzustellen.

Zur Lösung der eingangs genannten Aufgabe ist bei einer Einbau-Anordnung der eingangs beschriebenen Art erfindungsgemäß vorgesehen, dass das sanitäre Einbauteil erfindungsgemäß, ausgebildet ist. Von Vorteil ist dabei, dass eine lose in einer Armatur anordenbare Anordnung bereitgestellt ist, welche den Wasserdruck im Verbindungsschlauch aufnimmt, ohne dass an der Einbauteil-Anordnung und/oder an einem aufnehmenden Armaturenkörper zusätzliche Vorkehrungen zur Befestigung der Einbauteil-Anordnung erforderlich sind. Das sanitäre Einbauteil kann hierbei auch in den Armaturenkörper eingeklipst oder auf sonstige Weise befestigt sein.

Bei einer Ausgestaltung der Erfindung kann vorgesehen sein, dass der Verbindungsschlauch wenigstens einen längenveränderbaren Axialabschnitt aufweist. Beispielsweise kann der Axialabschnitt faltenbalgartig gefaltet stein. Von Vorteil ist dabei, dass das sanitäre Einbauteil mit dem befestigten Verbindungsschlauch auf einfache Weise aus einem Armaturenkörper zur Demontage herausziehbar ist und während der Montage hineinsteckbar ist. Der Verbindungsschlauch bildet somit einen Innenschlauch einer Sanitärarmatur, der mit einem sanitären Einbauteil, beispielsweise dem erfindungsgemäßen sanitären Einbauteil oder einem anderen sanitären Einbauteil, steckverbunden ist.

Die Ausbildung eines faltenbalgartig gefalteten Axialabschnitts hat den weiteren Vorteil, dass der verbindungsschlauch mit kleineren Radien krümmbar ist.

Bei einer Ausgestaltung der Erfindung kann vorgesehen sein, dass an dem Verbindungsschlauch Markierungen vorzugsweise in regelmäßigen Abständen angebracht sind, welche eine Länge der Schlauchaufnahme anzeigen. Von Vorteil ist dabei, dass der Benutzer bei einem von Meterware abgeschnittenen Schlauch leicht erkennen kann, wie weit der Verbindungschlauch auf oder in die Schlauchaufnahme gesteckt werden muss, um eine unverlierbare und dichte Befestigung zu erreichen. Die Markierung kann durch einen Farbwechsel im Verbindungsschlauch, durch Aufdruck, Einprägung oder Formgestaltung am Verbindungsschlauch oder auf sonstige Weise ausgebildet sein.

Zur Lösung der genannten Aufgabe wird erfindungsgemäß bei einer Sanitärarmatur der eingangs beschriebenen Art vorgeschlagen, dass die Einbauteil-Anordnung erfindungsgemäß ausgebildet ist. Von Vorteil ist dabei, dass eine einfach montierbare Sanitärarmatur bereitstellbar ist, bei welcher ein direkter Kontakt des transportierten Trinkwassers mit metallischen Oberflächen vermeidbar ist.

Bei einer Ausgestaltung der Erfindung kann vorgesehen sein, dass zumindest ein Axialabschnitt des Verbindungsschlauches in der Sanitärarmatur in seiner Erstreckungsrichtung verschiebbar angeordnet ist. Von Vorteil ist dabei, dass das sanitäre Einbauteil am Schlauchende durch Bewegen des Verbindungsschlauches aus der Armatur hinaus bewegbar ist.

Bei einer Ausgestaltung der Erfindung kann vorgesehen sein, dass der Grundkörper mit dem Armaturenkörper verlierbar verbunden ist. Beispielsweise kann hierbei vorgesehen sein, dass der Grundkörper durch den Verbindungsschlauch, also einen Innenschlauch der Sanitärarmatur, an dem Armaturenkörper gehalten ist. Von Vorteil ist dabei, dass eine Kraftaufnahme von aus dem Wasserdruck resultierenden Kräften durch den Armaturenkörper verzichtbar ist. Hierdurch kann der Materialeinsatz des Armaturenkörpers reduziert werden, ohne dass die Funktionsfähigkeit der Sanitärarmatur leidet.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1:: eine teilweise aufgeschnittene Seitenansicht eines erfindungsgemäßen sanitären Einbauteils,
- Figur 2:: eine Ansicht auf die Auslassöffnung des sanitären Einbauteils gemäß Figur 1,
- Figur 3:: eine dreidimensionale Schrägansicht des sanitären Einbauteils aus Figur 1,
- Figur 4:: eine Explosionsdarstellung des sanitären Einbauteils gemäß Figur 1,
- Figur 5:: einen Teil einer erfindungsgemäßen 3-Loch-Sanitärarmatur in teilweise aufgeschnittener Darstellung,
- Figur 6:: die Sanitärarmatur gemäß Figur 5 mit herausgezogenem sanitärem Einbauteil,
- Figur 7:: eine weitere Ansicht der erfindungsgemäßen Sanitärarmatur nach Figur 6,
- Figur 8:: die Sanitärarmatur gemäß Figur 6 mit in den Auslauf der Sanitärarmatur eingesetztem sanitärem Einbauteil,
- Figur 9:: eine weitere Ansicht der Situation gemäß Figur 8,
- Figur 10:: einen erfindungsgemäßen Verbindungsschlauch mit faltenbalgartig gefalteten Axialabschnitten, und
- Figur 11:: den erfindungsgemäßen verbindungsschlauch mit reduzierter Gesamtlänge.

An dem Grundkörper 4 ist zuströmseitig, also an der von dem Wasser bei Betrieb angeströmten Seite, eine Einlassöffnung 5 ausgebildet.

In Strömungsrichtung entlang eines Strömungswegs 6 hinter der Einlassöffnung 5 ist an dem Grundkörper 4 eine Strahl- und/oder Mengenreglereinheit 7 ausgebildet.

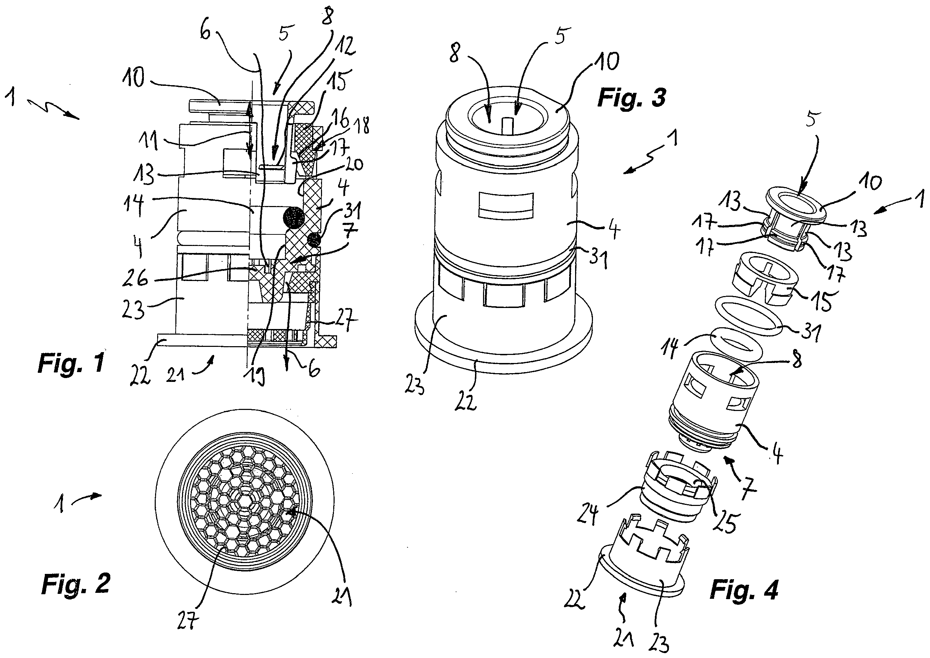

In dem Ausführungsbeispiel gemäß Figur 1 bis Figur 4 ist die Strahl- und/oder Mengenreglereinheit 7 als Strahlregler dargestellt. Bei weiteren Ausführungsbeispielen sind andere Funktionen, beispielsweise eine Mengenreglereinheit, realisiert.

An der Einlassöffnung 5 ist eine Schlauchaufnahme 8 ausgebildet.

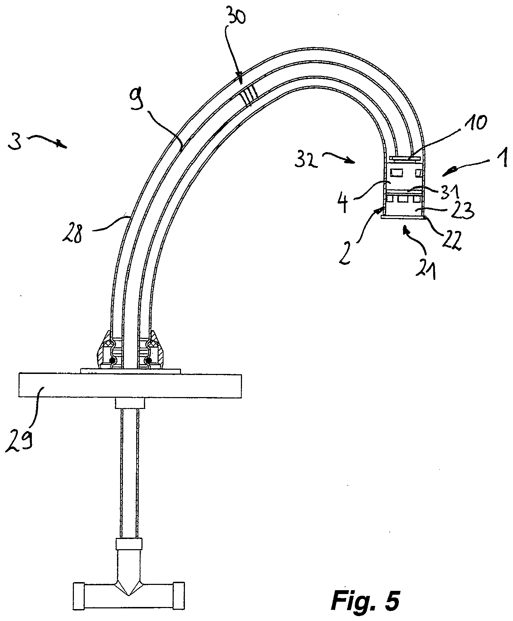

Die Schlauchaufnahme 8 ist zur Aufnahme eines Verbindungsschlauchs 9 (vergleiche Figur 5 bis 9) eingerichtet.

An dem Grundkörper 3 ist ein Befestigungsmittel 10 ausgebildet und montiert.

Mit dem Befestigungsmittel 10 ist ein Verbindungsschlauch 9, welcher mit der Schlauchaufnahme 8 steckverbunden ist, befestigbar.

Wie im Folgenden noch näher erläutert wird, ist das Befestigungsmittel 10 so eingerichtet, dass der steckverbundene Verbindungsschlauch 9 in der Schlauchaufnahme 8 arretierbar oder sicherbar ist, so dass der Verbindungsschlauch 9 an dem Grundkörper 4 unverlierbar befestigbar ist.

Durch diese Befestigung ist der Verbindungsschlauch 9 zugfest befestigbar, um einen Wasserdruck im Verbindungsschlauch 9 durch den Grundkörper 4 aufzunehmen.

Das Befestigungsmittel 10 ist hierbei zur lösbaren Befestigung ausgebildet, so dass der Verbindungsschlauch 9 zur Entnahme freigebbar ist.

In Figur 1 ist erkennbar, dass die Schlauchaufnahme 8 als Ausnehmung ausgebildet ist.

Somit ist der Verbindungsschlauch 9 bei dem Ausführungsbeispiel gemäß Figur 1 bis 4 in die Schlauchaufnahme 8 einsteckbar.

Bei weiteren Ausführungsbeispielen kann die Schlauchaufnahme 8 auch als Schlauchnippel oder Olive ausgebildet sein, wobei der Verbindungsschlauch 9 auf die Schlauchaufnahme 8 aufsteckbar ist.

In den Figuren 1, 3 und 4 ist erkennbar, dass das Befestigungsmittel 10 ring- oder hülsenförmig ausgebildet ist.

Die Schlauchaufnahme 8 definiert eine Verbindungsrichtung 11, in welcher der Verbindungsschlauch 9 steckverbunden und gelöst wird. Das ring- oder hülsenförmige Befestigungsmittel 10 ist um diese Verbindungsrichtung 11 umlaufend ausgebildet.

Somit begrenzt das Befestigungsmittel 10 die Schlauchaufnahme 8 radial nach außen.

Die Begriffe radial, Umfangsrichtung und axial werden in dieser Beschreibung in Bezug auf die Längsachse des sanitären Einbauteils 1 gebraucht.

Das Befestigungsmittel 10 ist an dem Grundkörper 4 drehbar um die Verbindungsrichtung 11 angeordnet. Somit führt eine Drehung des Grundkörpers 4 um die Verbindungsrichtung 11 nicht zu einem Mitdrehen eines steckverbundenen Verbindungsschlauches 9.

Zur Arretierung bzw. Freigabe ist das Befestigungsmittel 10 an dem Grundkörper 4 axial verschiebbar angeordnet.

Hierdurch kann das Befestigungsmittel 10 zwischen einer arretierenden Position, in welcher der steckverbundene Verbindungsschlauch 9 an dem Grundkörper 4 unverlierbar befestigt ist, und einer freigebenden Position, in welcher der Verbindungsschlauch 9 aus der Schlauchaufnahme 8 entnehmbar ist, umgeschaltet werden.

Zur Befestigung des eingesteckten Verbindungsschlauch 9 weist das Befestigungsmittel 10 mehrere, beispielsweise vier oder mehr als vier, Halteelemente 12 auf, die als Haltekralle oder Halteschneide jeweils einen Widerhaken bilden und mit dem eingesetzten Verbindungsschlauch 9 verhaken.

Figur 1 zeigt das Halteelement 12 als Halteschneide.

Diese Halteelemente 12 sind an jeweils einem Haltefinger 13 innenseitig ausgebildet und stehen in die Schlauchaufnahme 8 ab.

Die Haltefinger 13 erstrecken sich axial und sind elastisch verformbar.

Die Haltefinger 13 können somit von außen radial beaufschlagt werden, um die Halteelemente 12 in einen eingesteckten Verbindungsschlauch 9 einzudrücken, wodurch dieser Verbindungsschlauch 9 zugfest gehalten ist.

Werden die Haltefinger 13 dagegen radial nach außen bewegt, so wird die Verbindung zwischen den Halteelementen 12 und dem eingesteckten Verbindungsschlauch 9 gelöst, so dass der Verbindungsschlauch 9 aus der Schlauchaufnahme 8 entnehmbar ist.

In Figur 1 ist ersichtlich, dass an einem axialen Ende der Schlauchaufnahme 8 die Strahl- und/oder Mengenreglereinheit 7 an dem Grundkörper 4 einstückig angeformt ist.

Der Grundkörper 4 ist hierbei einstückig aus Kunststoff ausgebildet.

In die Schlauchaufnahme 8 ist eine Dichtung 14 eingesetzt. Die Dichtung 14 läuft ringförmig um die Verbindungsrichtung 11 um und umgreift somit einen in die Schlauchaufnahme 8 eingesetzten Verbindungsschlauch 9.

Hierzu ist der Innendurchmesser der Dichtung 14 derart auf die lichte Weite des Befestigungselements 10 abgestimmt, dass ein durch das Befestigungselement 10 gerade noch einsetzbarer Verbindungsschlauch 9 an der Dichtung 14 dicht anliegt.

Zwischen dem Befestigungsmittel 10 und dem Grundkörper 4 ist ein Arretierungsring 15 eingesetzt, mit welchem das Befestigungsmittel 10 arretierbar ist.

Hierzu weist der Arretierungsring 15 eine innenseitige Schrägfläche 16, beispielsweise einen Innenkonus, auf. Die Schrägfläche 16 wikt mit einer außenseitigen Nase 17 an jedem Haltefinger 13 des Befestigungsmittels 10 derart zusammen, dass bei einer Relativverschiebung des Befestigungsmittels 10 gegen den Arretierungsring 15 das Halteelement 12 jedes Haltefingers 13 nach innen in die Schlauchaufnahme gegen den Verbindungsschlauch 9 gedrückt wird. Mit einer entgegengesetzten Bewegung des Befestigungsmittels 10 kann diese Verbindung wieder gelöst werden. Hierzu können an dem Grundkörper Vorsprünge ausgebildet sein, mit denen die Haltefinger 12 vom Verbindungsschlauch abhebbar sind.

Der Arretierungsring 15 ist mit einer Rastverbindung 18 in dem Grundkörper 4 befestigt.

Durch die zweiteilige Ausbildung von Grundkörper 4 und Arretierungsring 15 kann der Arretierungsring 15 eingesetzt werden, nachdem die Dichtung 14 in die Schlauchaufnahme 8 eingesetzt wurde.

In der Schlauchaufnahme 8 ist an dem Axialende, welches der Strahl- und/oder Mengenreglereinheit 7 zugewandt ist, ein erster Innenzylinderabschnitt 19 ausgebildet.

Dieser erste Innenzylinderabschnitt 19 weist einen Innenradius auf, der auf den Außenradius eines einsteckbaren Verbindungsschlauch 9 derart abgestimmt ist, dass der Verbindungsschlauch 9 in den ersten Innenzylinderabschnitt 19 einsteckbar ist.

Der Innenradius des ersten Innenzylinderabschnitts 19 ist daher geringfügig größer gewählt als der Innenradius der Dichtung 14. Somit ist ein Verbindungsschlauch 9 in den ersten Innenzylinderabschnitt 19 einsteckbar, welcher die Dichtung 14 radial nach außen verdrängt und gegen einen zweiten Innenzylinderabschnitt 20 presst.

Dieser zweite Innenzylinderabschnitt 20 ist in Einsteckrichtung der Schlauchaufnahme 8 dem ersten Innenzylinderabschnitt 19 und der Dichtung 14 vorgelagert.

Der zweite Innenzylinderabschnitt 20 nimmt die Dichtung 14f auf und weist einen zweiten Innenradius auf, welcher auf den ersten Innenradius des ersten Innenzylinderabschnitts 19 und die radiale Materialstärke der Dichtung 14 derart abgestimmt ist, dass der Verbindungsschlauch 9 nicht nur die Dichtung 14 nach außen radial verdrängt, sondern dass die Dichtung 14 zwischen dem eingesteckten Verbindungsschlauch 9 und dem zweiten Innenradius 20 einen dichten Abschluss nach außen bildet.

Hierzu ist die Differenz zwischen dem zweiten Innenradius zweiten Innenzylinderabschnitts 20 und dem ersten Innenradius des ersten Innenzylinderabschnitts 19 kleiner als die radiale Materialstärke der Dichtung 14 gewählt.

In Figur 3 ist zu erkennen, dass der Grundkörper 4 außenseitig glatt und insbesondere gewindelos ausgebildet ist.

Um zu verhindern, dass der Grundkörper 4 durch den Rückstoß des Wassers beim Austritt aus der Auslassöffnung 21 in die Auslauföffnung 2 der Sanitärarmatur 3 vollständig hineingedrückt wird, ist an dem sanitären Einbauteil 1 ein Anschlagelement 22 ausgebildet, welches das sanitäre Einbauteil 1 an der Auslauföffnung 2 hält.

Das Anschlagelement 22 ist hierbei radial von dem sanitären Einbauteil 1 nach außen abstehend ausgebildet und umgibt das sanitäre Einbauteil 1 ringförmig.

Das Anschlagelement 22 ist hierbei an einer Aufsatzhülse 23 ausgebildet, welche mit dem Grundkörper 4 mit einer Rastverbindung verbunden ist.

Die Aufsatzhülse 23 kann auch mit dem Grundkörper 4 einstückig verbunden sein. Die gezeigte zweiteilige Ausführung von Aufsatzhülse 23 und Grundkörper 4 dient dazu, einen Einsatz 24, welcher eine ringförmig umlaufende, in Strömungsrichtung des Strömungswegs 6 sich konisch verjüngende Prallfläche 25 bereitstellt, einzusetzen.

Diese Prallfläche 25 wirkt mit einer Zerlegerplatte 26 der Strahl- und/oder Mengenreglereinheit 7 in an sich von einem Strahlregler bekannter Weise zusammen, um den Strahl zu zerstäuben.

Die Zerlegerplatte 26 ist einstückig am Grundkörper 4 ausgebildet, um den Wasserinnendruck in einen Verbindungsschlauch 9, der in die Schlauchaufnahme 8 eingesteckt ist, aufzunehmen.

Im Strömungsweg 6 an hinterster Stelle ist schließlich ein Gitteraufsatz 27 aufgesetzt.

Der Gitteraufsatz 27 definiert die Auslassöffnung 21.

Figur 5 zeigt das erfindungsgemäße sanitäre Einbauteil 1 in montierter Position bei einer Sanitärarmatur 3.

Die Sanitärarmatur ist hierbei beispielhaft als 3-Loch-Armatur gezeigt, wobei die zugehörigen Ventile der Einfachheit halber nicht dargestellt sind.

Es ist ersichtlich, dass der Armaturenkörper 28 mit vergleichsweise dünner Materialstärke ausgebildet werden kann, da der Wasserdruck durch den Verbindungsschlauch 9, der als Innenschlauch in dem Armaturenkörper 28 angeordnet ist, aufgenommen wird.

Das sanitäre Einbauteil 1 bildet mit dem Verbindungsschlauch 9 eine Einbauteil-Anordnung 32, die an dem Armaturenkörper 28 montiert ist.

Um das sanitäre Einbauteil 1 aus der Auslauföffnung 2 herauszunehmen, kann entweder der Verbindungsschlauch 9 unterhalb des Tisches 29 nach oben verschoben werden, oder es kann das Anschlagelement 22, welches geringfügig über den Armaturenkörper 28 übersteht, gegriffen werden.

Alternativ kann das Anschlagelement 22 auch als Schulter an einem Außenzylinderabschnitt ausgebildet sein.

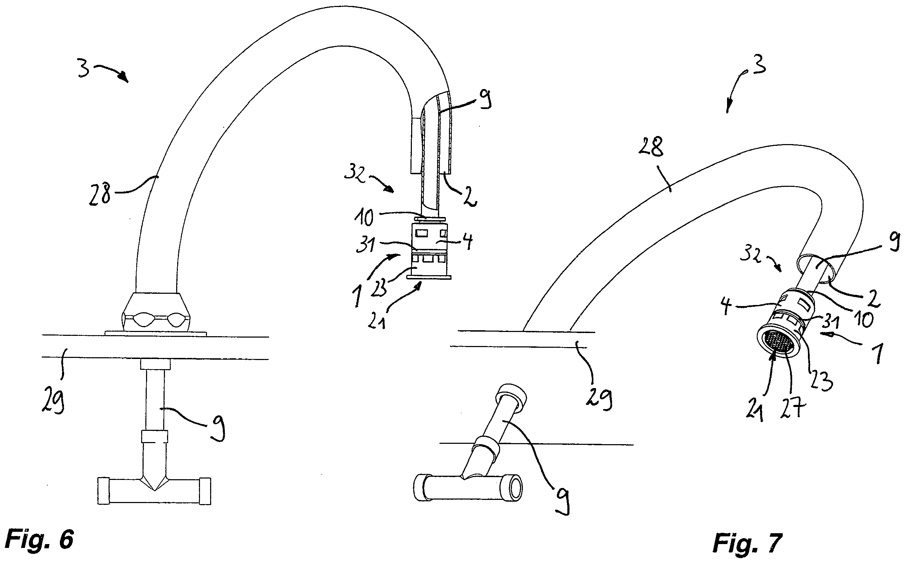

Figur 6 und Figur 7 zeigen das sanitäre Einbauteil 1 in unverlierbar an dem Verbindungsschlauch 9 befestigter Position, wenn es aus der Auslauföffnung 2 des Armaturenkörpers 28 herausgezogen ist.

Wird das Befestigungsmittel 10 gegen den Grundkörper 4 gedrückt, so löst sich die Verbindung zwischen den Halteelementen 12 und der Außenfläche des Verbindungsschlauchs 9.

Das sanitäre Einbauteil 1 kann nun entfernt und ausgetauscht werden.

Ein neues sanitäres Einbauteil 1 kann auf den nun freigewordenen Verbindungsschlauch 9 aufgesetzt und mit dem Verbindungsschlauch 9 zurück in die Auslauföffnung 2 gesetzt werden.

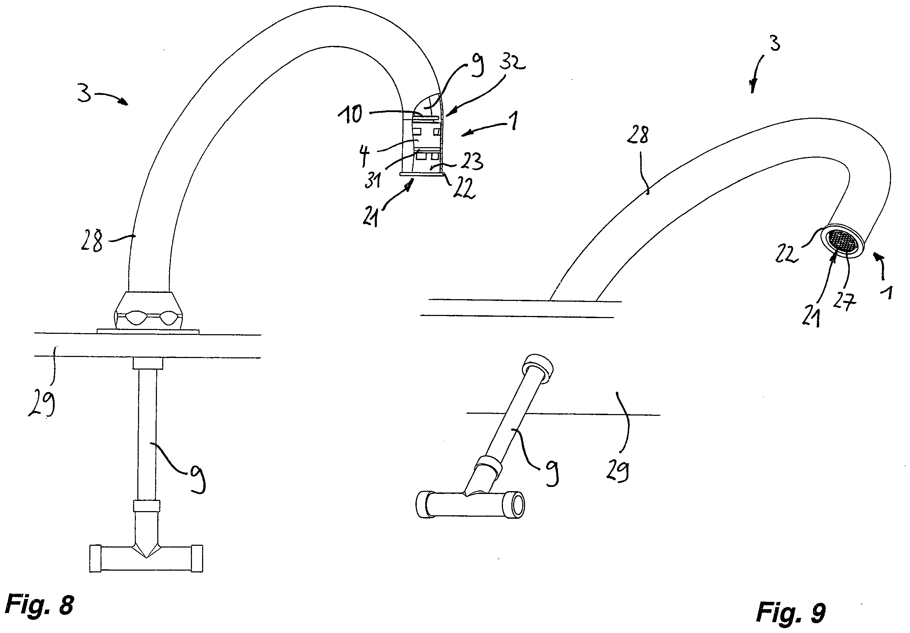

Es ergibt sich dann die Situation gemäß Figur 8 und Figur 9.

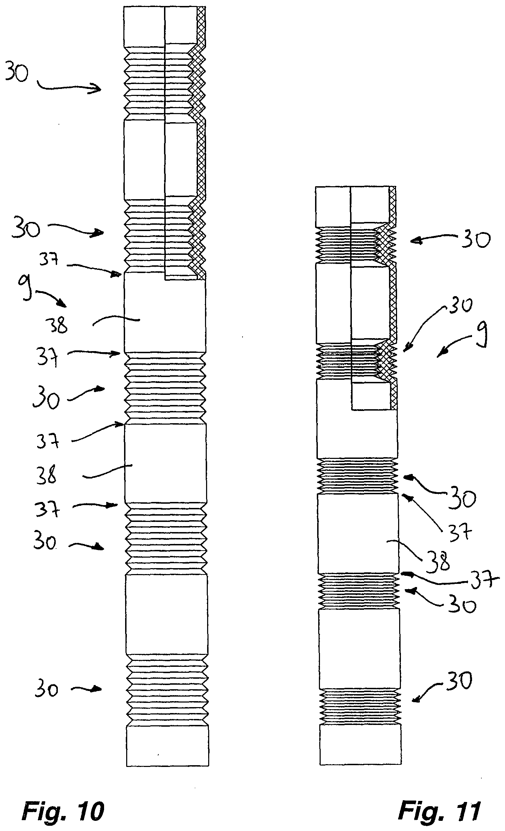

Figur 10 und Figur 11 zeigen eine Ausgestaltung des Verbindungsschlauchs 9, die beispielsweise eingesetzt werden kann, wenn der Verbindungsschlauch 9 nicht unterhalb des Tisches 29 nach oben verschoben werden kann.

In diesem Verbindungsschlauch 9 sind in regelmäßigen Abständen Axialabschnitte 30 ausgebildet, die längenveränderlich sind.

Figur 10 zeigt den Verbindungsschlauch mit ausgezogenen Axialabschnitten 30, Figur 11 zeigt denselben Verbindungsschlauch 9 mit gestauchten Axialabschnitten 30.

Die Axialabschnitte 30 sind hierbei faltenbalgartig gefaltet. Im Querschnitt weisen die Axialabschnitte eine Wandung mit zickzackförmigem Verlauf auf, wie in Figur 10 und Figur 11 ersichtlich ist.

Durch die regelmäßige Anordnung der Axialabschnitte 30, das heißt durch Anordnung der Axialabschnitte 30 mit einheitlichem Abstand zum jeweils benachbarten Axialabschnitt 30, ist sichergestellt, dass unabhängig von der verwendeten Länge des Verbindungsschlauchs 9 Axialabschnitte 30 zur Verfügung stehen, um die Längenveränderung zum Ausziehen des sanitären Einbauteils 1 aus der Auslausöffnung 2 zu ermöglichen.

Auf diese Weise kann das erfindungsgemäße sanitäre Einbauteil 1 auch bei einer 1-Loch-Armatur eingesetzt werden.

Die Übergänge zwischen den Axialabschnitten 30 und den glatten Schlauchabschnitten 38 bilden Markierungen 37. Die Länge der glatten Schlauchabschnitte 38 ist jeweils gleich der Länge der Schlauchaufnahme 8 gewählt. Mit anderen Worten zeigen die Markierungen 37 eine Länge der Schlauchaufnahme 8 am Verbindungsschlauch 9 an.

Somit kann ein Benutzer bei einem an einer Markierung 37 abgeschnittenen Verbindungsschlauch 9 leicht erkennen, wie weit der Verbindungsschlauch 9 in die Schlauchaufnahme 8 eingesteckt werden muss, damit das Ende des Verbindungsschlauches 9 die Schlauchaufnahme 8 ausfüllt.

Bei weiteren Ausführungsbeispielen sind die Markierungen 37 an einem Verbindungsschlauch 9 ausgebildet, der keine faltenbalgartige Axialabschnitte aufweist und nicht längenveränderlich ist.

Aus den Zeichnungen gemäß Figur 6 und 7 ist weiter ersichtlich, dass an der Auslauföffnung 2 keinerlei zusätzliche Maßnahmen erforderlich sind, um das sanitäre Einbauteil 1 zu halten.

Das sanitäre Einbauteil 1 ist somit verlierbar an dem Armaturenkörper 28 angeordnet und wird durch die Rückstoßkraft an der Auslassöffnung 21 des austretenden Wassers gehalten.

Um das sanitäre Einbauteil reibschlüssig in der Auslauföffnung 2 zu halten, ist an dem Grundkörper 4 außenseitig ein Haltering 31 vorgesehen.

Funktionell und/oder konstruktiv zu den vorangegangenen Ausführungsbeispielen identische oder gleichwirkende Bauteile und Funktionseinheiten sind mit denselben Bezugszeichen bezeichnet und nicht noch einmal gesondert beschrieben.

In den Fig. 1 bis 11 ist die Sanitärarmatur 3 zur Erläuterung der Erfindung beispielhaft als Bestandteil einer waschtischarmatur ausgebildet. Dies ist eine bevorzugte Anwendung des sanitären Einbauteils 1.

Bei weiteren Ausführungsbeispielen ist die Sanitärarmatur 3 als Brause, beispielsweise für wand-, Decken- und/oder Tischmontage oder als Handbrause oder als Unterdusche, insbesondere eines Bidet oder einer Waschschüssel, mit einem erfindungsgemäßen sanitären Einbauteil 1 ausgebildet.

Bei dem sanitären Einbauteil 1 mit einer Strahl- und/oder Mengenreglereinheit 7 wird vorgeschlagen, an der zuströmseitige Einlassöffnung 5 eine Schlauchaufnahme 8 auszubilden, mit welcher ein Verbindungsschlauch 9 steckverbindbar ist, wobei an einem die Schlauchaufnahme 8 bildenden Grundkörper 4 ein Befestigungsmittel 10 angeordnet ist, mit welchem der steckverbundene Verbindungsschlauch 9 in der Schlauchaufnahme 8 befestigbar und freigebbar ist.

### Bezugszeichenliste

- 1: Sanitäres Einbauteil
- 2: Auslauföffnung
- 3: Sanitärarmatur
- 4: Grundkörper
- 5: Einlassöffnung
- 6: Strömungsweg
- 7: Strahl- und/oder Mengenreglereinheit
- 8: Schlauchaufnahme
- 9: Verbindungsschlauch
- 10: Befestigungsmittel
- 11: Verbindungsrichtung
- 12: Halteelement
- 13: Haltefinger
- 14: Dichtung
- 15: Arretierungsring
- 16: Schrägfläche
- 17: Nase
- 18: Rastverbindung
- 19: erster Innenzylinderabschnitt
- 20: zweiter Innenzylinderabschnitt
- 21: Auslassöffnung
- 22: Anschlagelement
- 23: Aufsatzhülse
- 24: Einsatz
- 25: Prallfläche
- 26: Zerlegerplatte
- 27: Gitteraufsatz
- 28: Armaturenkörper
- 29: Tisch
- 30: Axialabschnitte
- 31: Haltering
- 32: Einbauteil-Anordnung
- 33: Aufnahme
- 34: Innengewinde
- 35: Verdrehsicherung
- 36: Klipselement
- 37: Markierung
- 38: glatter Schlauchabschnitt

## Patentansprüche

1. Sanitäres Einbauteil (1) mit
a) einem in eine Auslauföffnung (2) einer Sanitärarmatur (3) einsetzbaren Grundkörper (4),
b) einer an dem Grundkörper (4) zuströmseitig ausgebildeten Einlassöffnung (5),an der eine Schlauchaufnahme (8) ausgebildet ist, an welcher ein Verbindungsschlauch (9) an den Grundkörper (4) anschließbar ist,
c) einer in einem Strömungsweg (6) hinter der Einlassöffnung (5) an dem Grundkörper (4) angeordneten Strahl- und/oder Mengenreglereinheit (7), und mit
d) einem zur zugfesten Befestigung des Verbindungsschlauches (9) an dem Grundkörper (4) ausgebildeten Befestigungsmittel (10), mit dem der Verbindungsschlauch (9) an dem Grundkörper (4) unverlierbar befestigbar ist, wobei der Verbindungsschlauch (9) mit der Schlauchaufnahme (8) steckverbindbar und dazu in die als Ausnehmung ausgebildete Schlauchaufnahme (8) einsteckbar ist, und wobei der Verbindungsschlauch mittels dem Befestigungsmittel (10) in der Schlauchaufnahme (8) arretierbar oder sicherbar ist, so dass der Verbindungssehlauch (9) an dem Grundkörper, der einstückig ausgebildet ist, unverlierbar befestigt ist, **dadurch gekennzeichnet, dass** die Schlauchaufnahme (8) an der Strahl- und/oder Mengenreglereinheit (7) angeformt ist.

2. Sanitäres Einbauteil (1) nach Anspruch 1, **dadurch gekennzeichnet, dass** das Befestigungsmittel (10) zur lösbaren und zugfesten Befestigung eines steckverbindbaren Verbindungsschlauchs (9) an dem Grundkörper (4) ausgebildet ist.

3. Sanitäres Einbauteil (1) nach Anspruch 1 oder 2, **dadurch gekennzeichnet, dass** das Befestigungsmittel (10) um eine Verbindungsrichtung (11) drehbar an dem Grundkörper (4) angeordnet ist.

4. Sanitäres Einbauteil (1) nach einem der Ansprüche 1 bis 3, **dadurch gekennzeichnet, dass** das Befestigungsmittel (10) ring- oder hülsenförmig um eine durch die Schlauchaufnahme (8) definierte Verbindungsrichtung (11) umlaufend ausgebildet ist.

5. Sanitäres Einbauteil (1) nach einem der Ansprüche 1 bis 4, dadurch gekenntzeichnet, dass das Befestigungsmittel (10) zwischen einer einen an die Schlauchaufnahme (8) angeschlossenen Verbindungsschlauch (9) arretierenden Position und einer den Verbindungsschlauch (9) freigebenden Position umschaltbar ausgebildet ist und/oder dass das Befestigungsmittel (10) entlang einer durch die Schlauchaufnahme (8) definierten Verbindungsrichtung (11) verschiebbar angeordnet ist.

6. Sanitäres Einbauteil (1) nach einem der Ansprüche 1 bis 5, **dadurch gekennzeichnet, dass** das Befestigungsmittel (10) wenigstens ein in die Schlauchaufnahme (8) ragendes Halteelement (12), insbesondere eine Haltekralle oder Halteschneide, aufweist und/oder dass das wenigstens eine Halteelement (12) als ein Widerhaken ausgebildet ist.

7. Sanitäres Einbauteil (1) nach Anspruch 6 6, **dadurch gekennzeichnet, dass** das wenigstens eine Halteelement (12) an einem elastisch verformbaren, vorzugsweise sich axial erstreckenden, Haltefinger (13) ausgebildet ist.

8. Sanitäres Einbauteil (1) nach einem der Ansprüche 1 bis 7, **dadurch gekennzeichnet, dass** der Grundkörper (4) aus Kunststoff ausgebildet ist.

9. Sanitäres Einbauteil (1) nach einem der Ansprüche 1 bis 8, **dadurch gekennzeichnet, dass** in der Schlauchaufnahme (8) eine ringförmig um die oder eine durch die Schlauchaufnahme (8) definierte Verbindungsrichtung (11) umlaufende Dichtung (14) ausgebildet ist, und dass insbesondere ein Innendurchmesser der Dichtung (14) auf eine lichte Weite des Befestigungselements (10) abgestimmt ist.

10. Sanitäres Einbauteil (1) nach einem der Ansprüche 1 bis 9, **dadurch gekennzeichnet, dass** ein Arretierungsring (15) mit einer innenseitigen Schrägfläche (16), insbesondere einem Innenkonus, ausgebildet ist, die in der oder einer arretierenden Position mit der oder einer radial nach außen abstehenden Nase (17) des Befestigungsmittels (10) zusammenwirkt, und dass insbesondere der Arretierungsring (15) an dem Grundkörper (4) mit einer Rastverbindung (18) gehalten ist.

11. Sanitäres Einbauteil (1) nach einem der Ansprüche 9 bis 10, **dadurch gekennzeichnet, dass** in der Schlauchaufnahme (8) an einem der Strahl- und/oder Mengenreglereinheit (7) zugewandten Axialende ein erster Innenzylinderabschnitt (19) ausgebildet ist und/oder dass ein Innenradius des ersten Innenzylinderabschnitts (19) größer als ein Innenradius der Dichtung (14) gewählt ist.

12. Sanitäres Einbauteil (1) nach einem der Ansprüche 9 bis 11, **dadurch gekennzeichnet, dass** in der Schlauchaufnahme (8) ein in der oder einer Einsteckrichtung dem oder einem ersten Innenzylinderabschnitt (19) vorgelagerter zweiter Innenzylinderabschnitt (20) ausgebildet ist und/oder dass eine Differenz zwischen einem zweiten Innenradius des zweiten Innenzylinderabschnitts (20) und dem oder einem ersten Innenradius des ersten Innenzylinderabschnitts (19) kleiner als eine radiale Materialstärke der Dichtung (14) gewählt ist.

13. Sanitäres Einbauteil (1) nach einem der Ansprüche 1 bis 12, **dadurch gekennzeichnet, dass** der Grundkörper (4) außenseitig gewindelos ausgebildet ist.

14. Sanitäres Einbauteil (1) nach einem der Ansprüche 1 bis 13, **dadurch gekennzeichnet, dass** an dem sanitären Einbauteil (1) außenseitig ein radial abstehendes Anschlagelement (22) ausgebildet ist.

15. Sanitäres Einbauteil (1) nach einem der Ansprüche 1 bis 14, **dadurch gekennzeichnet, dass** die Strahl- und/oder Mengenreglereinheit (7) wenigstens eine mit dem Grundkörper (4) einstückig verbundene Zerlegerplatte (26) aufweist.

16. Einbauteil-Anordnung (32) mit einem in einer Sanitärarmatur (3) verlegbaren verbindungsschlauch (9) und einem sanitären Einbauteil (1) nach einem der Ansprüche 1 bis 15.

17. Einbauteil-Anordnung (32) nach Anspruch 16, **dadurch gekennzeichnet, dass** der Verbindungsschlauch (9) mit dem sanitären Einbauteil (1) steckverbunden ist und dass der Verbindungsschlauch (9) wenigstens einen längenveränderbaren, insbesondere faltenbalgartig gefalteten, Axialabschnitt (30) aufweist.

18. Einbauteil-Anordnung (32) nach Anspruch 16 oder 17, **dadurch gekennzeichnet, dass** an dem Verbindungsschlauch (9) Markierungen (37) vorzugsweise in regelmäßigen Abständen angebracht sind, welche eine Länge der Schlauchaufnahme (8) anzeigen.

19. Sanitärarmatur (3) mit einem Armaturenkörper (28) und einer in den Armaturenkörper (28) eingesetzten Einbauteil-Anordnung (32), **dadurch gekennzeichnet, dass** die Einbauteil-Anordnung (32) nach einem der Ansprüche 16 bis 18 ausgebildet ist.

20. Sanitärarmatur nach Anspruch 19, **dadurch gekennzeichnet, dass** zumindest ein Axialabschnitt (30) des Verbindungsschlauchs (9) in der Sanitärarmatur (3) in seiner Erstreckungsrichtung verschiebbar angeordnet ist und/oder dass der Grundkörper (4) mit dem Armaturenkörper (28) verlierbar verbunden und/oder durch den Verbindungsschlauch (9) an dem Armaturenkörper (28) gehalten ist.

## Claims

1. Sanitary insert part (1) comprising:
a) a main body (4) which can be inserted into an outlet opening (2) of a sanitary fitting (3),
b) an inlet opening (5) formed on the main body (4) on the inflow side, at which opening a hose holder (8) is formed, on which a connecting hose (9) can be connected to the main body (4),
c) a jet and/or flow regulator unit (7) arranged on the main body (4) downstream of the inlet opening (5) in a flow path (6), and comprising
d) a fastening means (10) which is configured for tension-resistant fastening of the connecting hose (9) on the main body (4), and by way of which the connecting hose (9) can be captively fastened to the main body (4), wherein the connecting hose (9) can be plug-connected to the hose holder (8) and to this end can be plugged into the hose holder (8) configured as an aperture, and wherein the connecting hose can be locked or secured in the hose holder (8) using the fastening means (10), such that the connecting hose (9) is captively fastened to the main body (4), which is formed as one piece, **characterised in that** the hose holder (8) is integrally formed on the jet and/or flow regulator unit (7).

2. Sanitary insert part (1) as claimed in claim 1, **characterised in that** the fastening means (10) is configured for fastening a plug-connectable connecting hose (9) to the main body (4) in a releasable and tension-resistant manner.

3. Sanitary insert part (1) as claimed in claim 1 or 2, **characterised in that** the fastening means (10) is arranged on the main body (4) so as to be rotatable about a connection direction (11).

4. Sanitary insert part (1) as claimed in any one of claims 1 to 3, **characterised in that** the fastening means (10) is configured so as to extend in an annular or sleeve-like manner about a connection direction (11) defined by the hose holder (8).

5. Sanitary insert part (1) as claimed in any one of claims 1 to 4, **characterised in that** the fastening means (10) is configured so as to be switchable between a position locking a connecting hose (9) connected to the hose holder (8) and a position releasing the connecting hose (9), and/or **in that** the fastening means (10) is arranged so as to be movable in a connection direction (11) defined by the hose holder (8).

6. Sanitary insert part (1) as claimed in any one of claims 1 to 5, **characterised in that** the fastening means (10) comprises at least one retaining element (12) which projects into the hose holder (8), in particular a retaining claw or retaining edge and/or **in that** the at least one retaining element (12) is in the form of a barb.

7. Sanitary insert part (1) as claimed in claim 6, **characterised in that** the at least one retaining element (12) is formed on an elastically deformable, preferably axially extending, retaining finger (13).

8. Sanitary insert part (1) as claimed in any one of claims 1 to 7, **characterised in that** the main body (4) is formed of synthetic material.

9. Sanitary insert part (1) as claimed in any one of claims 1 to 8, **characterised in that** a seal (14) which extends in an annular manner about the connection direction (11) or a connection direction (11) defined by the hose holder (8) is formed in the hose holder (8), and **in that** in particular an inside diameter of the seal (14) is adapted to a clear width of the fastening element (10).

10. Sanitary insert part (1) as claimed in any one of claims 1 to 9, **characterised in that** a locking ring (15) is formed with an inner inclined face (16), in particular an inner cone, said inclined face co-operating in the or a locking position with the or a lug (17) of the fastening means (10), said lug protruding radially outwards, and **in that** in particular the locking ring (15) is retained on the main body (4) by way of a latching connection (18).

11. Sanitary insert part (1) as claimed in any one of claims 9 to 10, **characterised in that** a first inner cylindrical portion (19) is formed in the hose holder (8) at an axial end facing the jet and/or flow regulator unit (7), and/or **in that** an inside radius of the first inner cylindrical portion (19) is selected to be larger than an inside radius of the seal (14).

12. Sanitary insert part (1) as claimed in any one of claims 9 to 11, **characterised in that** a second inner cylindrical portion (20) which is mounted upstream of the or a first inner cylindrical portion (19) in the or a plug-in direction, is formed in the hose holder (8), and/or **in that** a difference between a second inside radius of the second inner cylindrical portion (20) and the or a first inside radius of the first inner cylindrical portion (19) is selected to be smaller than a radial material thickness of the seal (14).

13. Sanitary insert part (1) as claimed in any one of claims 1 to 12, **characterised in that** the main body (4) is designed without a thread on the outside.

14. Sanitary insert part (1) as claimed in any one of claims 1 to 13, **characterised in that** a radially protruding stop element (22) is formed on the outside of the sanitary insert part (1).

15. Sanitary insert part (1) as claimed in any one of claims 1 to 14, **characterised in that** the jet and/or flow regulator unit (7) comprises at least one splitter plate (26) connected as one piece with the main body (4).

16. Insert part arrangement (32) having a connecting hose (9) which can be fitted in a sanitary fitting (3), and a sanitary insert part (1) as claimed in any one of claims 1 to 15.

17. Insert part arrangement (32) as claimed in claim 16, **characterised in that** the connecting hose (9) is plug-connected to the sanitary insert part (1), and **in that** the connecting hose (9) comprises at least one axial portion (30) which is variable in length, in particular is folded in the manner of a bellows.

18. Insert part arrangement (32) as claimed in claim 16 or 17, **characterised in that** markings (37) are applied, preferably at regular spaced intervals, to the connecting hose (9), said markings indicating a length of the hose holder (8).

19. Sanitary fitting (3) having a fitting body (28) and an insert part arrangement (32) inserted into the fitting body (28), **characterised in that** the insert part arrangement (32) is formed as claimed in any one of claims 16 to 18.

20. Sanitary fitting as claimed in claim 19, **characterised in that** at least one axial portion (30) of the connecting hose (9) is arranged so as to be movable in the sanitary fitting (3) in the extension direction thereof, and/or **in that** the main body (4) is connected in a detachable manner to the fitting body (28) and/or is retained on the fitting body (28) by way of the connecting hose (9).

## Revendications

1. Composant sanitaire (1) avec
a) un corps de base (4) insérable dans une ouverture de sortie (2) d'un robinet sanitaire (3),
b) une ouverture d'entrée (5) formée côté amont sur le corps de base (4), à laquelle est formé un connecteur de tuyau (8) par lequel un tuyau de raccordement (9) peut être raccordé au corps de base (4),
c) une unité de régulateur de jet et/ou de débit (7) disposée sur le corps de base (4) après l'ouverture d'entrée (5) dans un chemin d'écoulement (6), et avec
d) un moyen de fixation (10) configuré de manière à fixer d'une façon résistant à la traction le tuyau de raccordement (9) au corps de base (4), avec lequel le tuyau de raccordement (9) peut être fixé au corps de base (4) de façon imperdable, dans lequel le tuyau de raccordement (9) peut être engagé par emboîtement avec le connecteur de tuyau (8) et est à cet effet enfichable dans le connecteur de tuyau (8) réalisé en forme d'évidement, et dans lequel le tuyau de raccordement peut être bloqué ou fixé dans le connecteur de tuyau (8) au moyen du moyen de fixation (10), de telle manière que le tuyau de raccordement (9) soit fixé de façon imperdable sur le corps de base, qui est réalisé d'une seule pièce,
**caractérisé en ce que** le connecteur de tuyau (8) est formé sur l'unité de régulateur de jet et/ou de débit (7).

2. Composant sanitaire (1) selon la revendication 1, **caractérisé en ce que** le moyen de fixation (10) est conçu en vue de la fixation amovible et résistant à la traction d'un tuyau de raccordement enfichable (9) sur le corps de base (4).

3. Composant sanitaire (1) selon la revendication 1 ou 2, **caractérisé en ce que** le moyen de fixation (10) est disposé sur le corps de base (4) de façon rotative autour d'une direction de raccordement (11).

4. Composant sanitaire (1) selon l'une quelconque des revendications 1 à 3, **caractérisé en ce que** le moyen de fixation (10) est réalisé en forme de bague ou de douille entourant la direction de raccordement (11) définie par le connecteur de tuyau (8).

5. Composant sanitaire (1) selon l'une quelconque des revendications 1 à 4, **caractérisé en ce que** le moyen de fixation (10) est réalisé de façon commutable entre une position bloquant un tuyau de raccordement (9) raccordé au connecteur de tuyau (8) et une position libérant le tuyau de raccordement (9) et/ou **en ce que** le moyen de fixation (10) est disposé de façon déplaçable le long d'une direction de raccordement (11) définie par le connecteur de tuyau (8).

6. Composant sanitaire (1) selon l'une quelconque des revendications 1 à 5, **caractérisé en ce que** le moyen de fixation (10) présente au moins un élément de retenue (12) pénétrant dans le connecteur de tuyau (8), en particulier une griffe de retenue ou une lame de retenue, et/ou **en ce que** ledit au moins un élément de retenue (12) est réalisé sous la forme d'une barbe.

7. Composant sanitaire (1) selon la revendication 6, **caractérisé en ce que** ledit au moins un élément de retenue (12) est formé sur un doigt de retenue (13) déformable élastiquement, qui s'étend de préférence axialement.

8. Composant sanitaire (1) selon l'une quelconque des revendications 1 à 7, **caractérisé en ce que** le corps de base (4) est réalisé en matière plastique.

9. Composant sanitaire (1) selon l'une quelconque des revendications 1 à 8, **caractérisé en ce qu'**un joint d'étanchéité (14) entourant sous forme d'anneau une direction de raccordement (11) définie par le connecteur de tuyau (8) est formé dans le connecteur de tuyau (8), et **en ce qu'**en particulier un diamètre intérieur du joint d'étanchéité (14) est adapté à une largeur libre de l'élément de fixation (10).

10. Composant sanitaire (1) selon l'une quelconque des revendications 1 à 9, **caractérisé en ce qu'**une bague de blocage (15) est réalisée avec une face intérieure inclinée (16), en particulier un cône intérieur, qui dans la ou une position de blocage coopère avec le ou un ergot (17) saillant radialement vers l'extérieur du moyen de fixation (10), et **en ce qu'**en particulier la bague de blocage (15) est maintenue sur le corps de base (4) par un assemblage par encliquetage (18).

11. Composant sanitaire (1) selon une des revendications 9 à 10, **caractérisé en ce qu'**une première partie cylindrique intérieure (19) est formée dans le connecteur de tuyau (8) sur une extrémité axiale tournée vers l'unité de régulateur de jet et/ou de débit (7) et/ou **en ce qu'**un rayon intérieur de la première partie cylindrique intérieure (19) est choisi plus grand qu'un rayon intérieur du joint d'étanchéité (14).

12. Composant sanitaire (1) selon l'une quelconque des revendications 9 à 11, **caractérisé en ce qu'**une deuxième partie cylindrique intérieure (20) disposée avant la première partie cylindrique intérieure (19) dans la ou une direction d'engagement est formée dans le connecteur de tuyau (8) et/ou **en ce qu'**une différence entre un deuxième rayon intérieur de la deuxième partie cylindrique intérieure (20) et le ou un premier rayon intérieur de la première partie cylindrique intérieure (19) est choisie plus petite qu'une épaisseur de matière radiale du joint d'étanchéité (14).

13. Composant sanitaire (1) selon l'une quelconque des revendications 1 à 12, **caractérisé en ce que** le corps de base (4) est réalisé sans filet sur la surface extérieure.

14. Composant sanitaire (1) selon l'une quelconque des revendications 1 à 13, **caractérisé en ce qu'**un élément de butée radialement saillant (22) est formé extérieurement sur le composant sanitaire (1).

15. Composant sanitaire (1) selon l'une quelconque des revendications 1 à 14, **caractérisé en ce que** l'unité de régulateur de jet et/ou de débit (7) présente au moins une plaque de dispersion (26) reliée d'une seule pièce au corps de base (4).

16. Agencement de composants (32) avec un tuyau de raccordement (9) pouvant être monté dans un robinet sanitaire (3) et un composant sanitaire (1) selon l'une quelconque des revendications 1 à 15.

17. Agencement de composants (32) selon la revendication 16, **caractérisé en ce que** le tuyau de raccordement (9) est assemblé par emboîtement au composant sanitaire (1) et **en ce que** le tuyau de raccordement (9) présente au moins une partie axiale de longueur variable (30), en particulier à la manière d'un soufflet à plis.

18. Agencement de composants (32) selon la revendication 16 ou 17, **caractérisé en ce que** des marquages (37) sont apposés sur le tuyau de raccordement (9), de préférence à des distances régulières, qui indiquent une longueur du connecteur de tuyau (8).

19. Robinet sanitaire (3) avec un corps de robinet (28) et un agencement de composants (32) inséré dans le corps de robinet (28), **caractérisé en ce que** l'agencement de composants (32) est réalisé selon une des revendications 16 à 18.

20. Robinet sanitaire selon la revendication 19, **caractérisé en ce qu'**au moins une partie axiale (30) du tuyau de raccordement (9) est disposée dans le robinet sanitaire (3) de façon déplaçable dans sa direction d'extension et/ou **en ce que** le corps de base (4) est assemblé de façon imperdable au corps de robinet (28) et/ou est retenu sur le corps de robinet (28) au moyen du tuyau de raccordement (9).
